# EUROPEAN PATENT APPLICATION

(11) **EP 4 699 799 A1**
(43) Date of publication of application: **25.02.2026**
(21) Application number: 24195566.5
(22) Date of filing: 21.08.2024
(51) Int. Cl.: B32B 17/10

(54) **IMPROVED INTERLAYER FOR ILLUMINABLE LAMINATED GLAZING**

(71) Applicant: Kuraray Europe GmbH, 65795 Hattersheim (DE)
(72) Inventor: Lellig, Philipp, 50670 Köln (DE)
(74) Representative: Janßen, Christian Oliver

(57) **Abstract**

Described is an interlayer for an illuminable laminated glazing comprising a polyvinyl acetal, 22.0 to 45.0 % by weight of at least one plasticizer and a functional layer on at least one surface comprising light scattering particles with an improved ratio of maximum profile valley depth and particle size.

## Description

Described is an interlayer for an illuminable laminated glazing comprising a polyvinyl acetal, 22.0 to 45.0 % by weight of at least one plasticizer and a functional layer on at least one surface comprising light scattering particles with an improved ratio of maximum profile valley depth and particle size.

Traditional vehicle roof lights often suffer from uneven light distribution, resulting in bright spots and reduced aesthetic appeal. The integration of light scattering particles in vehicle lighting has been recognized as a potential solution to achieve a more homogeneous and aesthetic illumination. These particles are strategically distributed in the glazing to scatter incoming light from a light source, thereby providing a soft, diffused lighting effect across the vehicle's cabin. The particles can be coated onto the glass directly or they are embedded in or applied to the surface of the interlayer in case laminated glass is used for the vehicle roof window. The particles can also be coated or printed onto the interlayer in form of certain patterns to allow for the lighting to light up in certain shapes, e.g. the car manufacturers logo.

WO 2021/005162 A1 describes interlayers with light scattering particles printed on the surface of thin, relatively stiff polyvinyl butyral films - the usual material for interlayers for laminated glass - with a smooth surface. The stiffness as well as the low surface roughness allow for a very high resolution printing and thus, a clear, high-resolution and highly aesthetic shape of the illuminated patterns.

For certain applications however, the glass industry prefers a simpler and thus, more economical technology to introduce illuminated glazing while maintaining at least a good level of optical quality.

One possibility to achieve this goal would involve printing the light scattering particles directly onto a conventional polyvinyl butyral interlayer used for the production of laminated glass. Such conventional interlayers generally have a regular surface pattern embossed onto both surfaces of the interlayer to allow for de-airing of the glass-interlayer-glass stack during the lamination process. However, printing the particles onto such rough, conventional surfaces has led to undesirable results in the printing quality and thus, the illuminated pattern.

On the other hand, simple reduction of the depth of the embossed tranches - generally expressed by the maximum profile valley depth - might optimize the appearance of the illumination but leads to unfavourable behaviour during the lamination due to incomplete de-airing.

Thus, the objective of the present invention was to provide an illuminated roof light for vehicles that offers uniform light distribution, enhanced aesthetic appeal, improved passenger experience, as well as a glazing with lower production costs, raw material costs and/or an improved environmental footprint.

The current inventors have found that the optical quality of the illumination can be substantially improved while maintaining good de-airing property by optimizing the ratio between the maximum profile valley depth Rv and the mean particle size D50 of the light scattering particles. On one hand, the valleys of the trenches measured as Rv have to be deep enough to allow sufficient de-airing. However, the deeper the trenches are, the more distorted and fuzzy the printing becomes. This effect can be counteracted by optimizing the size of the light scattering particles in relation to the depth of the trenches. On one hand, the light scattering particles should not be too big as bigger particles can be easily detected by the human eye and thus, negatively affect the appearance of the glazing. On the other hand, too small particles appear to be too deeply located in the trenches leading to a deterioration of the printing quality. The right ratio of the two parameters allow for good printing quality while providing sufficient de-airing.

Therefore, one aspect of the present invention concerns an interlayer for an illuminable laminated glazing comprising a polyvinyl acetal, 22.0 to 45.0 % by weight of at least one plasticizer and a functional layer comprising light scattering particles on at least one surface, wherein the at least one surface comprising the functional layer has a maximum profile valley depth Rv from 10 to 30 um measured in accordance with EN ISO 4287 and wherein the light scattering particles have a mean particle size D50 from 100 to 500 nm and wherein the ratio Rv/D50 is from 30 to 300.

Preferably, the mean particle size D50 is from 150 to 400 nm, more preferably from 200 to 300 nm.

Preferably, the Rv is from 15 to 25 um.

Preferably, the ratio Rv/D50 is from 50 to 250, more preferably from 75 to 200 and most preferably from 100 to 150.

Also preferably, the Rsm of the at least one surface measured in accordance with EN ISO 4287 is from 225 to 750 um, more preferably from 250 to 650 um, even more preferably from 300 to 500 um. Also preferably the Rsm is from 250 to 550 um. Also preferably the Rz measured in accordance with EN ISO 4287 is from 20 to 45 um, more preferably from 25 to 40 um.

The light scattering particle are typically applied to the at least one surface of the interlayer films by means of a coating or printing process. In case of printing, they can be applied via techniques that are commonly known in the printing industry such as offset printing, rotogravure printing, flexography, screenprinting and inkjet printing, especially digital printing.

For forming the functional layer by printing, a printing ink consisting of 0.30 % by weight titanium dioxide (as light scattering particles), 27.0 % by weight of poly(methyl methacrylate) (PMMA) (as matrix material) and 36.3 % by weight of 2-butoxyethanol acetate and 36.3 % by weight of cyclohexanone (as sacrificial solvents), is most preferable chosen.

The mean particle size D50 of the light scattering particles is measured according to the method described below on the interlayer after the printing process.

The thickness of the functional layer is preferably 0.1 um to 100 um, more preferably 1.0 um to 20 µm before lamination.

The functional layer preferably comprises the light scattering particles and at least one matrix material. Suitable matrix materials include polymers in which the light scattering particles can be homogenously dispersed without decomposition. Preferably, the matrix material comprises homo- or copolymers of (meth)acrylate, methyl methacrylate, poly(vinyl) acetal, nitro cellulose, polystyrene, polyvinyl alcohol, polyurethane, poly carbonate and polyvinyl chloride. Most preferably, the matrix material is polyvinyl butyral.

Further components might be present in the functional layer. Examples of further components include co-resins, solvents, UV absorber, UV-stabilizer, cross-linker, curing agents, accelerants, photo-initiators, surfactants, stabilizers, filler, thixotropic modifiers and plasticizers.

Light scattering materials known in the art can be employed. Preferably, the light scattering particles are chosen from the group consisting of TiO₂, ZnO, Al₂O₃, ZrO₂, PbSO₄, BaSO₄, CaCO₃, glass, polymers and mixtures thereof. The light scattering particles can be used as solid or hollow beads or fibres.

Preferably, the light scattering particles are present in the functional layers in an amount of 0.1 to 10 % by weight, more preferred 0.2 to 5 % by weight, most preferably 0.25 to 1 % by weight.

Preferably, the light scattering particles are present in the functional layers in form of a concentration gradient, i.e. concentration of functional particles in the functional layers varies depending on the distance to the light source. More preferably, the concentration of light scattering particles in the functional layers increases with an increasing distance to the nearest light source.

Preferably, the functional layers covers only part of the polymer interlayer films. Thus, the functional layers can be applied in form of specific patterns. This embodiment is especially useful for informative and/or decorative glazing for aircrafts, trains or ships and for use in the construction area, especially for shop windows, elevators or facade glazing.

Preferably, the interlayer has a functional layer comprising light scattering particles on both surfaces wherein each surface has a layer has a maximum profile valley depth Rv from 10 to 30 µm measured in accordance with EN ISO 4287 and wherein the light scattering particles have a mean particle size D50 from 100 to 500 nm and wherein the ratio Rv/D50 is from 30 to 300.

This embodiment allows to simultaneously illuminate the roof window in different colours and/or different shapes. To this end, two different light sources with different colours are used to illuminate the two functional layers simultaneously or the two functional layers can be present in different printed patterns.

In order to allow for privacy as well as sun and heat protection of the passengers, the interlayer preferably has a light transmission TL (380 to 780 nm) based on DIN EN 410 on a test laminate using two standard panes of clear glass from 5 to 950, more preferably from 10 to 85% and most preferably from 25 to 75%. Also preferably, the interlayer is grey, e.g. by addition of carbon black to the interlayer.

Suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids;

- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Particularly preferred are 1,2-cyclohexane dicarboxylic acid diisononyl ester (DINCH) or triethylene glycol-bis-2-ethyl hexanoate (3GO or 3G8).

In addition, the interlayer may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The thickness of the interlayer films before lamination is preferably 250 to 2500 µm, more preferably 300 to 1600 µm, more preferably 380 - 1200 µm and most preferably 600 to 900 um or 350 to 450 um.

Polymer interlayer films, especially the preferred polyvinyl butyral films, are well-known in the art and can be obtained commercially, e.g, Kuraray Europe GmbH's Trosifol^{®} product range.

Another aspect of the present invention concerns a process for the production of the inventive interlayer comprising the following steps:
a. extrusion of a mixture of the polyvinyl acetal, the plasticizer and optionally, other components, under melt fracture conditions,
b. embossing the surfaces of the interlayer obtained in step a with a regular pattern in order to obtain the desired Rv value, and
c. coating or printing the light scattering particles on at least one surface of the interlayer.

"Melt fracture" as used herein shall refer to a phenomenon where the extrudate exhibits a jagged or irregular surface. This typically occurs when the polymer melt sticks to the die lips and then slips as the pressure builds up, leading to distortions on the surface of the extruded material. The term "under melt fracture conditions" shall denote that at least one surface of the interlayer shows an Rv of at least 5 um after the extrusion and before the embossing step.

In another aspect, the present invention concerns a process for the production of the inventive interlayer comprising the following steps:
a. extrusion of a mixture of the polyvinyl acetal, the plasticizer and optionally, other components, under conditions with no melt fracture,
b. embossing the surfaces of the interlayer obtained in step a with an irregular, random pattern,
c. embossing the surfaces of the interlayer obtained in step a with a regular pattern in order to obtain the desired Rv value, and
d. coating or printing the light scattering particles on at least one surface of the interlayer.

The term "under conditions with no melt fracture" shall denote an extrusion process wherein both surfaces of the interlayer show an Rv of less than 5 um after the extrusion.

It has surprisingly been found that - depending on the printing pattern and printing ink used in the decoration of the surfaces, it is either favourable or unfavourable to use an interlayer with or without melt fracture on the surface before embossing.

The films are generally produced by extrusion with use of a cast-film line. The embossed surface roughness can be produced by use of a structured chill roll and/or structured back roll to introduced the required Rv value by methods well-known in the art.

In another aspect the present invention concerns an illuminable laminated glazing comprising the inventive interlayer between two rigid sheets as well as an interlayer obtained by the inventive process.

Preferably, the rigid material is a rigid polymer like PET, polycarbonate or PMMA. However, most preferably the rigid material is glass.

Also preferably, the outer sheet of glass is coloured and/or provided with an IR-reflecting or absorbing coating.

Also preferably, the laminated glazing further comprises a light source and an optical connector in contact with a sheet of rigid material. The light source can also emit the light through hole in the rigid material and/or be guided into the glazing by means of optical elements, e.g. prisms. The light source may be any conventional light source, preferably it is an LED light source.

### Examples

### Printing

TiO2 particles are used as light scattering particles. A commercially available TiO2-based UV-curable ink for ink jet printing was used. The ink was printed onto commercially available PVB film (Trosifol^{®} V200 0.38 mm from Kuraray Europe GmbH) using a commercially available ink jet printer. Rz, Rv and Rsm of the PVB film were measure according to EN ISO 4287.
Rz = 40 µm
Rv = 21 µm
Rsm = 358 um

### SEM measurement

Prior to the SEM measurement, printed PVB films were sputtered with a platinum-layer of 20 Angstrom. A scanning electron microscope of type SU-8230 manufactured by Hitachi was used by applying an acceleration voltage of 2 kV to record magnified images at a magnification level of x30000.

### Determination of TiO2 particle size

To calculate the TiO2 particle size using the SEM images, the area of 25 randomly chosen TiO2 particles was measured using the freeware image software ImageJ. The equivalent circle diameter d for each TiO2 particle was calculated according to the formula d=√/4*a/π. From the resulting 25 diameters, D10, D50 and D90 values were calculated.

**Table 1: results of the particle size measurements**

| # | Area of TiO2 particle / nm2 | d / nm |
|---|---|---|
| 1 | 63.079 | 283 |
| 2 | 27.247 | 186 |
| 3 | 27.054 | 186 |
| 4 | 30.141 | 196 |
| 5 | 76.003 | 311 |
| 6 | 28.356 | 190 |
| 7 | 27.585 | 187 |
| 8 | 44.705 | 239 |
| 9 | 36.217 | 215 |
| 10 | 6.076 | 88 |
| 11 | 10.368 | 115 |
| 12 | 37.616 | 219 |
| 13 | 15.866 | 142 |
| 14 | 56.761 | 269 |
| 15 | 18.133 | 152 |
| 16 | 14.564 | 136 |
| 17 | 38.532 | 221 |
| 18 | 23.245 | 172 |
| 19 | 24.643 | 177 |
| 20 | 31.780 | 201 |
| 21 | 22.569 | 170 |
| 22 | 25.077 | 179 |
| 23 | 36.121 | 214 |
| 24 | 40.750 | 228 |
| 25 | 28.405 | 190 |
| | average | 195 |
| | D10 | 139 |
| | D50 | 190 |
| | D90 | 235 |
| | Rv/D50 (µm/µm) | 210 |

## Claims

1. An interlayer for an illuminable laminated glazing comprising a polyvinyl acetal, 22.0 to 45.0 % by weight of at least one plasticizer and a functional layer comprising light scattering particles on at least one surface, wherein the at least one surface comprising the functional layer has a maximum profile valley depth Rv from 10 to 30 µm measured in accordance with EN ISO 4287 and wherein the light scattering particles have a mean particle size D50 from 100 to 500 nm and wherein the ratio Rv/D50 is from 30 to 300.

2. The interlayer according to claim 1 wherein the mean particle size D50 is from 150 to 250 nm.

3. The interlayer according to claim 1 or 2 wherein the Rv is from 15 to 25 um.

4. The interlayer according to any one of the claims above wherein the light scattering particles are chosen from the group consisting of TiO2, ZnO, Al2O3, ZrO2, PbSO4, BaSO4, CaCO3, glass, polymers and mixtures thereof.

5. The interlayer according to any one of the claims above wherein the functional layer comprises light scattering particles and a binder and is printed or coated onto the at least one surface.

6. The interlayer according to any one of the claims above wherein the functional layer is printed onto the interlayer by means of a digital printing process.

7. The interlayer according to any one of the claims above with a functional layer comprising light scattering particles on both surfaces wherein each surface has a layer has a maximum profile valley depth Rv from 10 to 30 µm measured in accordance with EN ISO 4287 and wherein the light scattering particles have a mean particle size D50 from 100 to 500 nm and wherein the ratio Rv/D50 is from 30 to 300.

8. The interlayer according to any one of the claims above wherein the interlayer has a light transmission TL (380 to 780 nm) based on DIN EN 410 on a test laminate using two standard panes of clear glass from 5 to 950.

9. The interlayer according to any one of the claims above wherein the interlayer is grey.

10. A process for the production of the interlayer according to any one of the claims above comprising the following steps:
a. extrusion of a mixture of the polyvinyl acetal, the plasticizer and optionally, other components, under melt fracture conditions,
b. embossing the surfaces of the interlayer obtained in step a with a regular pattern in order to obtain the desired Rv value, and
c. coating or printing the light scattering particles on at least one surface of the interlayer.

11. A process for the production of the interlayer according to claim 1 to 9 comprising the following steps:
a. extrusion of a mixture of the polyvinyl acetal, the plasticizer and optionally, other components, under conditions with no melt fracture,
b. embossing the surfaces of the interlayer obtained in step a with an irregular, random pattern,
c. embossing the surfaces of the interlayer obtained in step a with a regular pattern in order to obtain the desired Rv value, and
d. coating or printing the light scattering particles on at least one surface of the interlayer.

12. An illuminable laminated glazing comprising the interlayer according to any one of claims 1 to 9 between two rigid sheets.

13. An illuminable laminated glazing obtained by the process according to claim 11 or 12.

14. The illuminable laminated glazing according to any one of claims 11 to 13 wherein the rigid sheets are two sheets of glass.

15. The illuminable laminated glazing according to claim 14 wherein the outer sheet of glass is coloured and/or provided with an IR-reflecting or absorbing coating.
